# EUROPÄISCHE PATENTSCHRIFT

(11) **EP 0 508 989 B1**
(45) Veröffentlichungstag und Bekanntmachung des Hinweises auf die Patenterteilung: **05.01.1994**
(21) Anmeldenummer: 90917716.4
(22) Anmeldetag: 30.11.1990
(51) Int. Cl.: B65G 65/44, F23J 3/06, F23J 15/00, B01D 53/08

(54) **VORRICHTUNG ZUM DOSIERTEN AUSTRAGEN VON SCHÜTTFÄHIGEM FESTSTOFF**
DEVICE FOR THE METERED DELIVERY OF POURABLE SOLIDS
DISPOSITIF POUR LE DEVERSEMENT DOSE DE MATIERES SOLIDES EN VRAC

(30) Priorität: 05.01.1990 DE 4000204
(43) Veröffentlichungstag der Anmeldung: 21.10.1992
(73) Patentinhaber: STEAG AG, D-45128 Essen (DE)
(72) Erfinder: BRÜGGENDICK, Hermann, D-4224 Hünxe (DE); KLINGINGER, Karl, D-4300 Essen 14 (DE)
(86) Internationale Anmeldenummer: EP9002056
(87) Internationale Veröffentlichungsnummer: WO9109801

(56) Entgegenhaltungen:
- DE-A- 3 406 413
- DE-B- 1 117 049
- FR-A- 2 086 104
- US-A- 2 620 946

## Beschreibung

Vorrichtung zum dosierten Austragen von schüttfähigem Feststoff (Schüttgut) aus wenigstens einer Abgabeöffnung mit einem unter der Abgabeöffnung angeordneten im wesentlichen horizontalen Zwischenspeicherboden, auf den das aus der Abgabeöffnung austretende Schüttgut aufgeschüttet ist, und mit wenigstens einem Austragsrechen mit mindestens einer Schaufel, der in den Raum unterhalb der Abgabeöffnung eingreifend und relativ zum Zwischenspeicherboden quer zur Schüttrichtung derart beweglich angeordnet ist, daß das unter der Abgabeöffnung aufgeböschte Schüttgut in eine seitliche Austragungsöffnung verschiebbar ist.

Adsorptionsmittelreaktoren mit einem kontinuierlich oder quasi kontinuierlich wandernden Bett aus einem schütt- oder rieselfähigem Adsorptionsmittel werden in zunehmenden Umfang zur Abgasreinigung verwendet. Der Wirkungsgrad der Abgasreinigung hängt dabei entscheidend vom gleichmäßigen Austausch der beladenen Adsorptionsmittelteilchen gegen frische und reaktionsfähige Partikel ab. Frische Feststoffteilchen werden von oben in dem Maße in den Reaktor eingegeben, in dem beladene Schüttgutpartikel nach Durchwandern des Reaktors und Reaktion mit dem zu reinigenden Fluid unten aus den Abgabeöffnungen ausgetragen worden sind. Der Austrag mittels rotierender Dosiervorrichtungen hat sich wegen der Agressivität der Austragsstoffe sowie der ungleichmäßigen Partikelgröße und -form des Adsorptionsmittels nicht bewährt. In Zuordnung vor allem zu großtechnischen Adsorptionsapparaten werden einfache Chargiervorrichtungen, wie Klappen, Schieber oder Rechen der eingangs genannten Art verwendet, die bei jeder zyklischen Bewegung eine vorgegebene Schüttgutmenge aus jeder Abgabeöffnung freigeben.

Aus der DE-A-3 406 413 ist eine Vorrichtung der eingangs genannten Art bekannt, bei der der Austragsrechen zur horizontalen Führung auf den rechteckigen Zwischenbodenabschnitten aufsitzt und damit sowohl Zwischenspeicherboden und als auch Unterkanten des Austragsrechens einem hohen Verschleiß ausgesetzt sind. Weiterhin besteht die Gefahr, daß das durch die Rechenbewegung auszutragende Schüttgut die Rechenbewegung blockiert. Es können Betriebsstörungen sowie ungenaue Dosierungen durch eingeschränkte Bewegungshübe des Rechens und ein erheblicher laufender Wartungsaufwand auftreten.

Aus der FR-A-2 086 104 ist eine Vorrichtung zum dosierten Austrag aus einer Austragsöffnung bekannt, bei der unterhalb der Austragsöffnung eine gekrümmte Zwischenspeicherplatte angeordnet ist. Mittels zweier an dem die Austragsöffnung bestimmenden Rohr außen schwenkbar gelagerten Kreissektorplatten wird eine einzige zwischen ihnen befestigte Schaufel mit Abstand über die gekrümmte Zwischenspeicherplatte hin und her geschwenkt, um auf die Platte aufgeschüttetes Schüttgut über die Kanten der gekrümmten Zwischenspeicherplatte zu schieben. Wegen einer Schwenklagerung mit nur einer einzigen Schwenkachse ist es erforderlich, den Zwischenspeicherboden stark zu krümmen. Für einen dosierten Austrag aus mehreren in einer Reihe hintereinanderliegenden Austragsöffnungen ist die bekannte Anordnung nicht geeignet.

Der Erfindung liegt die Aufgabe zugrunde, die gattungsgemäße Vorrichtung so zu verbessern, daß sie unter Beibehaltung einer im wesentlichen horizontalen Führung ihre zuverlässige Dosierfunktion auch unter den erschwerenden Bedingungen des Austrags von agressivem, scharfkantigem und körnigem Schüttgut über erhöhte Betriebszeiten wartungsfrei beibehält.

Gelöst wird diese Aufgabe erfindungsgemäß dadurch, daß dermindestens einer Schaufel aufweisende Austragsrechen an einem Schwingenparallelogramm schwingend aufgehängt ist, wobei alle oberen Schwenkachsen in einer gemeinsamen Horizontalebene angeordnet sind.

Der Austragsrechen kommt ohne verstopfungsgefährdete lineare Führungen aus. Die Pendellager können entfernt von den besonders staub- und granulatgefährdeten Bereichen wesentlich oberhalb der Abgabeöffnungen angeordnet sein und andererseits derart gekapselt werden, daß ein Eindringen von Staub oder Abriebteilchen weitgehend verhindert ist. Die Horizontalbewegung des schwingend oder pendelnd aufgehängten Rechens sind ausreichend groß, um den unter der Abgabeöffnung aufgeböschten Schüttkegel bei jeder Hin- und Herbewegung des Rechens zur einen oder anderen Seite in die Austragsöffnungen abzutransportieren; die demgegenüber kleinhubigen Vertikalbewegungen der wirksamen Schaufeln lockern den Schüttkegel auf und vermindern im Vergleich zu rein horizontalen Linearbewegungen die zum Transport des Schüttguts erforderlichen Schubkräfte. Einen Schleifkontakt gibt es zwischen dem Austragsrechen bzw. dessen Schaufeln und den feststehenden Komponenten des Austrags - wenn überhaupt - nur in geringem Maße mittelbar über die auszutragenden Feststoffpartikel.

Eine besonders genaue Horizontalführung des Austragsrechens ohne ineinandergreifende Führungskomponenten wird durch die Aufhängung des Austragsrechens an dem Schwingenparallelogramm aufgehängt. Die Schwenkachsen liegen in einer gemeinsamen Horizontalebene, die mit Abstand oberhalb der Abgabeöffnungen angeordnet ist. Bei dieser Art der pendelnden Aufhängung bleiben die Schaufelwinkel in jeder Bewegungsphase konstant und können dementsprechend auf den optimalen Schaufelwirkungsgrad sowohl während des Vorwärts- als auch des Rückwärtshubs voreingestellt werden.

Bei den in der Praxis üblichen Adsorptionsapparaten sind die Abgabeöffnungen raster- oder matrixartig in Spalten und Reihen angeordnet. Ein Austragsrechen kann mehreren in einer Ebene und wenigstens einer Reihe hintereinander angeordneten Abgabeöffnungen zugeordnet sein. Dies vermindert den Aufwand für das oder die zugehörigen Antriebsaggregate.

Vorzugsweise sind mehrere rechteckige Zwischenbodenabschnitte und Austragsöffnungen in Rechen-Bewegungsrichtung hintereinander angeordnet. Nach Durchlauf der Schaufel im Spalt unterhalb jeder Abgabeöffnung böscht sich das Schüttgut wieder auf und wird während der Rückwärtsbewegung in die auf der anderen Seite des Zwischenspeicherbodenabschnitts gelegene Austragsöffnung ausgetragen.

In bevorzugter Ausführungsform besteht der Austragsrechen aus einem Rahmen, in den als Schaufeln wirkende Wände eingezogen sind.

Der Antrieb des Antriebsrechens ist in bevorzugter Ausführungsform der Erfindung von wenigstens einem Kurbeltrieb abgeleitet. Der Kurbeltrieb ermöglicht die genaue Einstellung eines horizontalen Bewegungshubes ohne Beeinträchtigung durch diesen überlagerte (geringe) Vertikalbewegungen. Mehrere Austragsrechen können in unterschiedlichem Bewegungstakt und/oder phasenverschoben betätigbar sein. Dadurch können mehrere nebeneinanderliegende Reaktionskammern oder Kammerbereiche mit unterschiedlichen Bett-Wandergeschwindigkeiten oder unterschiedlichen Austauschmengen bedient werden, um den Schüttgutaustrag den Reaktionsverhältnissen in allen Reaktorbereichen möglichst optimal anzupassen.

Die Trägerkomponenten und deren Halterung können sich nach den jeweiligen Einsatzbedingungen richten. So kann der Austragsrechen beispielsweise am Reaktorboden oder an einem selbständigen Gestell aufgehängt sein.

Weitere Einzelheiten der Erfindung ergeben sich aus der folgenden Beschreibung von in der Zeichnung schematisch angegebenen Ausführungsbeispielen. Auch Teilkombinationen der Merkmale der Ansprüche gelten als erfindungswesentlich offenbart.

In der Zeichnung zeigen:
- Fig. 1: eine Vertikalansicht auf den unteren Teil eines Adsorptionsapparates mit einem Ausführungsbeispiel der neuen Austragsvorrichtung, gesehen quer zur Bewegungsrichtung der bewegten Teile der Austragsvorrichtung;
- Fig. 2: eine zu Figur 1 rechtwinklige Vertikalansicht;
- Fig. 3: eine Auschnittsansicht, in der eine zu der Ausführung gemäß Figur 1 alternative Aufhängung des Austragsrechens veranschaulicht ist.

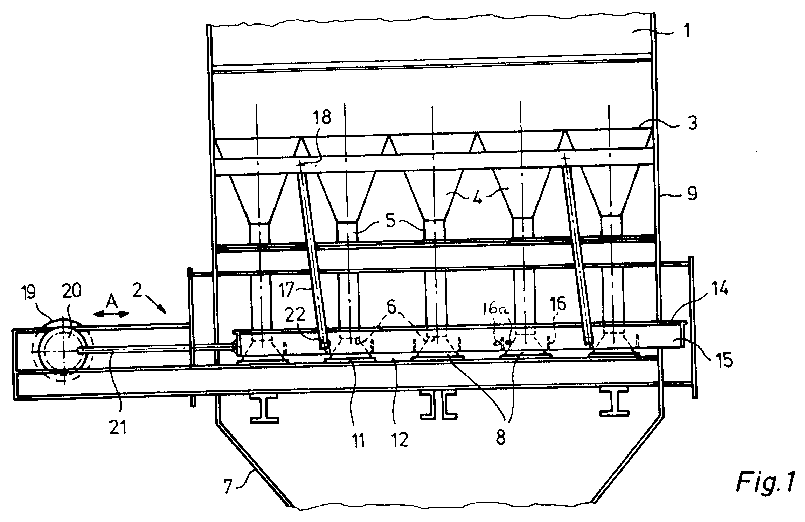

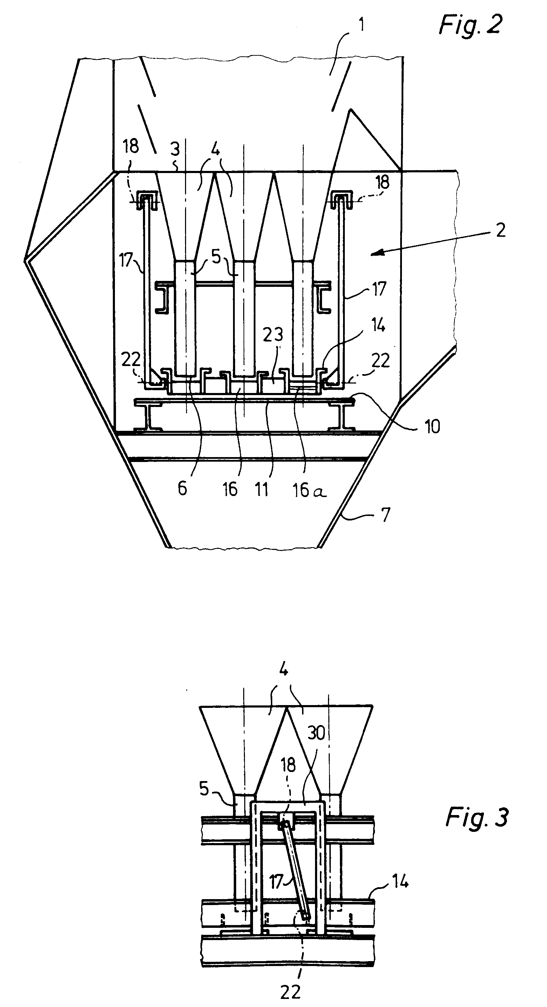

In der Darstellung gemäß den Figuren 1 und 2 ist die Erfindung in Anwendung auf einen sogenannten Querstromadsorber gezeigt, bei dem das zu reinigende Fluid in Figur 1 von links nach rechts den Reaktor 1 durchströmt, während das Adsorptionsmittel entsprechend der Austragsleistung der bodenseitig am Reaktor angeordneten Austragsvorrichtung 2 den Reaktor vertikal durchwandert.

Im Reaktorboden 3 sind fünfzehn Abzugstrichter 4 in einer Matrix aus fünf Spalten und drei Reihen angeordnet. Jeder Abzugstrichter 4 mündet in einen vertikal verlaufenden Abzugskanal 5. Alle Abzugskanäle haben in einer gemeinsamen Horizontalebene angeordnete Abgabeöffnungen 6.

Mit Abstand unterhalb jeder Abgabeöffnung ist ein Zwischenspeicherboden 10 angeordnet, der mehrere in einer gemeinsamen Horizontalebene liegende rechteckige Abschnitte 11 aufweist. Zu beiden Seiten jedes Abschnitts 11 des Zwischenspeicherbodens 10 sind Austrittsöffnungen 12 vorgesehen, die in einen den gesamten Reaktorboden überspannenden Austragstrichter 7 münden. Die zuvor beschriebenen Komponenten des Adsorptionsapparats sind bekannt; ihre Ausbildung ist für die Erfindung unkritisch, mit anderen Worten, die nachfolgend beschriebene Austragsvorrichtung läßt sich mit prinzipiell gleichen Vorteilen auf Gegenstrom-, Querstrom- und sogar Gleichstromreaktoren sowie auf alle Apparate anwenden, bei denen schüttfähige Feststoffe dosiert aus einem Reaktionsraum oder sonstigen Speicherraum ausgetragen werden sollen.

In Figur 1 sind unterhalb der Abgabeöffungen 6 schematisch Schüttkegel 8 dargestellt, die im Betrieb über jedem Abschnitt 11 des Zwischenspeicherbodens 10 aufgeböscht sind, bevor sie ausgetragen werden. Die Austragsvorrichtung 2 weist einen Austragsrechen 14 auf, der aus einem rechteckigen Rahmen 15 und in diesem sprossenförmig angeordneten Schaufeln 16 besteht. Der Rechen ist so bemessen, daß er mit den Schaufeln 16 und den quer verlaufenden Rahmenseiten im Spalt zwischen dem Zwischenspeicherboden 10 und den die Abgabeöffnungen 6 umgebenden Unterkanten der Abzugskanäle 5 berührungsfrei bewegt werden kann. Die Schüttkegel 8 können von den Schaufeln 16 und den querverlaufenden Seiten des Rahmens 15 begrenzt werden. Der Rechen 14 ist an ein Schwingenparallelogramm bildenden Schwenkarmen 17 derart aufgehängt, daß sein Rahmen 15 in jeder Schwenkstellung des Schwingenparallelogramms horizontal verläuft. Die Schwenkarme 17 haben am oberen Ende ortsfest angeordnete Lagerpunkte, deren Achsen 18 parallel zueinander in einer gemeinsamen Horizontalebene liegen. In dem in Figuren 1 und 2 dargestellten Ausführungsbeispiel sind die Lagerpunkte neben dem Reaktorboden 3 an Reaktor-Trägerkonstruktionen 9 angeordnet. Alternativ können die Schwenkarme 17 auch an eigenen Trägerbrücken 30 (Figur 3) angeordnet sein.

Als Antrieb der Austragsvorrichtung 2 dient ein Motor 19 in Kombination mit einem Kurbeltrieb 20. Der Kurbeltrieb 20 hat eine Kurbelstange 21, die an einer Seite des Austragsrechens 14 angelenkt ist und den Austragsrechen 14 in Richtung des Doppelpfeils A in Figur 1 antreibt. Der Bewegung in der horizontalen Hauptrichtung A ist aufgrund der Schwingenaufhängung des Rechens 14 eine leichte Vertikalbewegung überlagert, die jedoch im Vergleich zur horizontalen Transportbewegung in Richtung Pfeil A gering ist. Sie ist um so geringer, je größer der Abstand zwischen den Anlenkpunkten 18 und 22 der Schwenkarme 17 ist. Die geringfügige Vertikalbewegung ist jedoch durchaus betrieblich erwünscht; denn sie verleiht dem körnigen, pulvrigen oder granulatartigen Schüttgut beim Überstreichen der Abschnitte 11 durch die Schaufeln 16 des Austragsrechens 14 eine zusätzliche Dreh- oder Abrollbewegung und löst damit Klumpenbildungen auf. Ein verstärktes Aufbrechen von zusammenbackendem Schüttgut läßt sich mittels Stäben, Zinken, kantiger Vorsprünge, Rippen, Nasen o.dgl. 16a erreichen, die den wirksamen Schaufelflächen des Austragsrechens 14 vorauseilend angeordnet sind und das Schüttgut nach Art einer Harke oder Pflugschar aufbrechen. Der Bewegungshub in Richtung des Doppelpfeils A ist so groß gewählt, daß jeder Schüttkegel zumindest während eines Bewegungshubs in einer Richtung in eine der benachbarten Austragsöffnungen 12 ausgeworfen wird. Bevorzugt ist aber die Anordnung der Schaufeln 16 und der querverlaufenden Seiten des Rahmens 15 derart, daß in jeder Bewegungsrichtung ein Transport eines Schüttkegels 8 in eine der beiden benachbarten Austragsöffnungen 12 und die Abführung durch den Austragstrichter 7 stattfindet.

Wie oben gesagt, ist es für die Kinematik und die Förderleistung der in den Figuren 1 und 2 dargestellten Austragsvorrichtung ohne Bedeutung, an welchen horizontalen Stellen die Lagerpunkte 18 angeordnet sind. Wesentlich sind der horizontale Schwenkausschlag und die Anordnung bzw. das Anordnungsraster der Schaufeln 16 und/oder der Rahmenseiten. Dieses Anordnungraster ist bei dem in Figur 1 dargestellten Ausführungsbeispiel so gewählt, daß in der rechten Endstellung (Figur 1) des Rechens 14 die äußerst rechte Schaufel 16 den unter dem ersten Abzugskanal aufgenommenen Schüttkegel 8 in die äußerst rechte Austragsöffnung 12 abgeworfen hat; in der entgegengesetzten, äußerst linken Pendellage des Rechens 14 bzw. der Arme 17 hat dieselbe Schaufel 16 den zwischenzeitlich unter der äußerst rechten Abgabeöffnung 6 aufgebauten Schüttkegel über den rechten Abschnitt 11 bis in den Bereich der linken Austragsöffnung 12 verschoben und wirft ihn in diese Austragsöffnung ab. Die Schaufel 16 hat daher ihre tiefste Vertikalstellung in derjenigen Schwenklage des Rechens 14 erreicht, bei der sie axial unterhalb der Ausgabeöffnung 6 angeordnet ist. Die Schaufeln 16 und die querverlaufenden Seiten des Rahmens 15 (Fig. 1 links und rechts) können auch zur Begrenzung und Einstellung des Schüttkegels 8 dienen. Zu diesem Zweck müssen die Abstände zwischen benachbarten Schaufeln 16 kleiner sein als die Breite in Richtung A jedes Zwischenspeicherbodenabschnitts 11. Außerdem muß der Rechen nach jedem Austragshub in einer geeigneten Stellung angehalten werden, in der die Schaufeln paarweise auf die Achsen der Abgabeöffnungen 6 zentriert sind, so daß jeweils zentrierte Schüttkegel 8 entstehen können.

Die gesamte Matrix von in Reihen und Spalten angeordneten Abzugskanälen 5 und Abgabeöffnungen 6 wird in dem beschriebenen Ausführungsbeispiel von einem rechteckigen Austragsrechen 14 bedient. Die sprossenförmig eingesetzten Schaufeln 16 sind von Reihe zu Reihe, d.h. in Spaltenrichtung, durch Querglieder 23 starr gekoppelt. Diese Querkoppeln 23 können aber auch entfallen, und die dann entstehenden, die Einzelreihen bedienenden Rechen 14 phasenverschoben und/oder sogar mit unterschiedlichen Geschwindigkeiten angetrieben werden. Auch hierfür eignet sich eine Kurbelanordnung, deren Kurbelstangen ggf. mit unterschiedlichen Abständen und/oder in unterschiedlichen Winkelabständen an einer gemeinsamen Kurbelscheibe angelenkt sind.

Die zuvor beschriebene schwingende Aufhängung des Austragsrechens 14 ist praktisch universell anwendbar. Die Ausgabeöffnungen 6 brauchen keineswegs wie bei dem in der Zeichnung dargestellten Ausführungsbeispiel auf einem gemeinsamen Horizontalniveau zu liegen; jede zwischen Ausgabeöffnung 6 und Abschnitt 11 des Zwischenspeicherbodens wirksame Schaufel 16 kann entsprechend der Lage, Größe und Ausbildung des zugehörigen Schüttkegels auf einem anderen Bewegungsniveau und bei einem von Schaufel zu Schaufel durchaus unterschiedlichen Anstellwinkel bewegt werden. Es gibt auch keinerlei Beschränkungen hinsichtlich der Anzahl und/oder Lage der von einem Austragsrechen 14 zu bedienenden Abgabeöffnungen 6 und Zwischenbodenbodeste 11. Parameter dieser Art lassen sich bei der Erfindung von Fall zu Fall vom Konstrukteur frei wählen. Durch geeignete Wahl der Länge der Schwingen bzw. Hebelarme 17 kann auch das Verhältnis zwischen horizontalem und vertikalem Hub eingestellt werden. Wie zu sehen ist, sind zur Halterung und Führung der bewegten Teile der erfindungsgemäßen Austragsvorrichtung nur einfache Schwenklager 18, 22 erforderlich, die unempfindlich gegen die starke Staub- und Granulatbelastung am Einsatzort sind.

## Patentansprüche

1. Vorrichtung zum dosierten Austragen von schüttfähigem Feststoff (Schüttgut) aus wenigstens einer Abgabeöffnung (6)
mit einem unter der Abgabeöffnung (6) angeordneten im wesentlichen horizontalen Zwischenspeicherboden (10), auf den das aus der Abgabeöffnung (6) austretende Schüttgut aufgeschüttet ist,
und mit wenigstens einem Austragsrechen (14) mit mindestens einer Schaufel (16), der in den Raum unterhalb der Abgabeöffnung (6) eingreifend und relativ zum Zwischenspeicherboden quer zur Schüttrichtung derart beweglich angeordnet ist, daß das unter der Abgabeöffnung aufgeböschte Schüttgut (8) in eine seitliche Austragungsöffnung (12) verschiebbar ist,
**dadurch gekennzeichnet**, daß der mindestens einer Schaufel (16) aufweisende Austragsrechen (14) an einem Schwingenparallelogramm (17) schwingend aufgehängt ist, wobei alle oberen Schwenkachsen (18) in einer gemeinsamen Horizontalebene angeordnet sind.

2. Vorrichtung nach Anspruch 1, dadurch gekennzeichnet, daß ein Austragsrechen (14) mehreren in einer Ebene und wenigstens einer Reihe hintereinander angeordneten Abgabeöffnungen (6) zugeordnet ist.

3. Vorrichtung nach Anspruch 2, dadurch gekennzeichnet, daß rechteckige Zwischenspeicherbodenabschnitte (11) und Austragsöffnungen (12) in Bewegungsrichtung (A) des Austragsrechens (14) hintereinander angeordnet sind.

4. Vorrichtung nach einem der Ansprüche 1 bis 3, dadurch gekennzeichnet, daß der Austragsrechen (14) aus einem Rahmen (15) besteht, in dem als Schaufeln wirkende Wände (16) sprossenartig eingesetzt sind.

5. Vorrichtung nach einem der Ansprüche 1 bis 4, dadurch gekennzeichnet, daß der Austragsrechen (14) von einem Kurbeltrieb (19...21) angetrieben ist.

6. Vorrichtung nach einem der Ansprüche 2 bis 5, dadurch gekennzeichnet, daß mehrere Austrag srechen (15) zur Bedienung mehrerer nebeneinander liegender Abgabeöffnungsreihen (6) parallel bewegbar angeordnet sind.

7. Vorrichtung nach Anspruch 6, dadurch gekennzeichnet, daß die Austragsrechen (14) in unterschiedlichem Bewegungstakt und/oder phasenverschoben betätigbar sind.

8. Vorrichtung nach einem der Ansprüche 1 bis 7, dadurch gekennzeichnet, daß der Austragsrechen (14) an einem Reaktorboden (3) aufgehängt ist.

9. Vorrichtung nach einem der Ansprüche 1 bis 8, dadurch gekennzeichnet, daß der Austragsrechen (14) an einer eigenen Trägerkonstruktion (30) aufgehängt ist.

10. Vorrichtung nach Anspruch 9, dadurch gekennzeichnet, daß die Trägerkonstruktion (30) wenigstens zwei parallel angeordnete Brückenträger (30) aufweist.

11. Vorrichtung nach einem der Ansprüche 4 bis 10, dadurch gekennzeichnet, daß am Austragsrechen (14) Mittel (16a) zum Aufbrechen des Schüttgutkegels (8) angeordnet sind.

12. Vorrichtung nach Anspruch 11, dadurch gekennzeichnet, daß die Aufbrechmittel als Schneidkanten, Stäbe (16a), Zinken oder spitze oder nasenförmige Vorsprünge ausgebildet sind, die den wirksamen Schaufelflächen in Austragsbewegungsrichtung (A) voreilen.

## Claims

1. Device for the metered delivery of pourable solid material (loose material) from at least one discharge opening (6), with a substantially horizontal intermediate storage base (10), which is arranged below the discharge opening (6) and on which the loose material exiting from the discharge opening (6) is deposited, and with at least one delivery rack (14) with at least one blade (16), which is arranged to engage in the space underneath the discharge opening (6) and to be movable relative to the intermediate storage base and transversely to the pouring direction in such a manner that the loose material (8) banked up under the discharge opening is displaceable into a lateral delivery opening (12), characterised thereby that the delivery rack (14) having at least one blade (16) is oscillatingly suspended at an oscillatory parallelogram linkage (17), wherein all upper pivot axes (18) are arranged in a common horizontal plane.

2. Device according to claim 1, characterised thereby that a delivery rack (14) is associated with several discharge openings (6) arranged in one plane and one behind the other in at least one row.

3. Device according to claim 2, characterised thereby that rectangular sections (11) of the intermediate storage base and delivery openings (12) are arranged one behind the other in the movement direction (A) of the delivery rack (14).

4. Device according to one of claims 1 to 3, characterised thereby that the delivery rack (14) consists of a frame (15), in which walls (16) acting as blades are arranged in the manner of staves.

5. Device according to one of claims 1 to 4, characterised thereby that the delivery rack (14) is driven by a crank drive (19...21).

6. Device according to one of claims 2 to 5, characterised thereby that several delivery racks (14) are arranged to be parallelly movable for the serving of several adjacently disposed rows of discharge openings (6).

7. Device according to claim 6, characterised thereby that the delivery racks (14) are actuable in different movement cycles and/or displaced in phase.

8. Device according to one of claims 1 to 7, characterised thereby that the delivery rack (14) is suspended at a reactor base (3).

9. Device according to one of claims 1 to 8, characterised thereby that the delivery rack (14) is suspended at a respective carrier construction (30).

10. Device according to claim 9, characterised thereby that the carrier construction (30) comprises at least two parallelly arranged bridge girders (30).

11. Device according to one of claims 4 to 10, characterised thereby that means (16a) for breaking up of the cone (8) of loose material are arranged at the delivery rack (14).

12. Device according to claim 11, characterised thereby that the breaking-up means are constructed as cutting edges, rods (16a), tines or spikes or stud-shaped projections, which precede the effective blade surfaces in delivery movement direction (A).

## Revendications

1. Dispositif pour l'évacuation dosée de matières solides en vrac (produits en vrac) à partir d'au moins une ouverture de déversement comprenant un fond de réservoir intermédiaire (10) disposé sous l'ouverture de déversement (6), sensiblement horizontal, sur lequel sont versées les matières en vrac sortant de l'ouverture de déversement (6), et avec au moins un râteau d'évacuation (14) comprenant au moins une pelle (16), et qui est disposé de façon à venir en prise avec l'espace en-dessous de l'ouverture de déversement (6) et mobile relativement au fond de réservoir intermédiaire transversalement à la direction de versement, en ce que les matières en vrac (8) accumulées sous l'ouverture de déversement sont déplaçables dans une ouverture d'évacuation latérale (12), caractérisé en ce que le râteau d'évacuation (14) présentant au moins une pelle (16) est accrochée de façon oscillant à un parallélogramme suspendu ou oscillant (17), tous les axes de pivotement supérieurs (18) étant disposés dans un plan horizontal commun.

2. Dispositif selon la revendication 1, caractérisé en ce qu'un râteau d'évacuation (14) est associé à plusieurs ouvertures de déversement (6) disposées dans un plan et disposées au moins en une rangée les unes derrières les autres.

3. Dispositif selon la revendication 2, caractérisé en ce que des tronçons de fond de réservoir intermédiaire (11) rectangulaires et des ouvertures d'évacuation (12) sont disposés les uns derrière les autres dans le sens de déplacement (A) du râteau d'évacuation (14).

4. Dispositif selon l'une des revendications 1 à 3, caractérisé en ce que le râteau d'évacuation (14) est constitué d'un cadre (15) dans lequel sont placées, sous forme de barreaux, des parois (16) agissant comme pelles.

5. Dispositif selon l'une des revendications 1 à 4, caractérisé en ce que le râteau d'évacuation (14) est entraîné par un mécanisme à manivelle (19...21).

6. Dispositif selon l'une des revendications 2 à 5, caractérisé en ce que plusieurs râteaux d'évacuation (15) sont disposés de façon déplaçable parallèlement pour actionner plusieurs rangées d'ouvertures de déversement (6) disposées les unes à côté des autres.

7. Dispositif selon la revendication 6, caractérisé en ce que les râteaux d'évacuation (14) peuvent être actionnés suivant une cadence de mouvements différente et/ou par décalage de phase.

8. Dispositif selon l'une des revendications 1 à 7, caractérisé en ce que le râteau d'évacuation (14) est accroché à un fond de réacteur (3).

9. Dispositif selon l'une des revendications 1 à 8, caractérisé en ce que le râteau d'évacuation (14) est accroché à une construction de support propre (30).

10. Dispositif selon la revendication 9, caractérisé en ce que la construction de support (30) présente au moins deux supports de pont (30) disposés parallèlement l'un à l'autre.

11. Dispositif selon l'une des revendications 4 à 10, caractérisé en ce que des moyens (16a) sont disposés au râteau d'évacuation (14) pour casser le cône des matières en vrac (8).

12. Dispositif selon la revendication 11, caractérisé en ce que les moyens cassants sont réalisés sous forme d'arêtes coupantes, de tiges (16a), de dents ou de saillies pointues ou en forme de nez qui devancent les surfaces de pelle actives dans la direction du mouvement d'évacuation (A).
